# EUROPEAN PATENT SPECIFICATION

(11) **EP 4 338 651 B1**
(45) Date of publication and mention of the grant of the patent: **14.05.2025**
(21) Application number: 23198009.5
(22) Date of filing: 18.09.2023
(51) Int. Cl.: A47L 11/40

(54) **FLOOR TREATMENT MACHINE**
BODENBEARBEITUNGSMASCHINE
MACHINE DE TRAITEMENT DE SOL

(30) Priority: 16.09.2022 GB 202213610
(43) Date of publication of application: 20.03.2024
(73) Proprietor: NUMATIC INTERNATIONAL LIMITED, Camberley Surrey GU15 3SY (GB)
(72) Inventor: SIMPSON, Peter, Chard TA20 2GB (GB)
(74) Representative: Cleveland Scott York

(56) References cited:
- WO-A1-2022/129900
- KR-A- 20140 138 433

## Description

The present invention relates to a floor treatment machine, such as a floor scrubber drier or autonomous cleaning machine. Particularly, though not exclusively, the invention relates to a floor treatment machine having a motor for applying direct drive to a rotatable workhead at a controlled optimum speed and torque.

Known floor scrubbers typically have at least one workhead formed from an annular rotatable scrubbing portion including bristles or a polishing pad. The workhead(s) are driven by electric motors via a battery or mains electric power. Typically, 'wet' scrubbers have a cleaning fluid dispenser from which detergent or dilute cleaning solution can be distributed over the surface to be cleaned. Conventional motors used in floor scrubbers require a gearbox to deliver the required torque to the workhead. Consequently, power consumption is high and the multiple mechanical parts increase frictional resistance of the gearbox resulting in low transmission efficiency and increased likelihood of component failures.

KR20140138433 discloses a slim floor cleaner with a brushless DC motor, which is connected via a belt drive to an accessory coupling member for rotating various tools at a range of different speeds with examples ranging from 120 RPM to 4500 RPM.

Thus, it is an object of the present invention to provide a floor treatment machine, such as a scrubber drier or autonomous cleaning machine, with a high efficiency drive mechanism operable within specific parameters optimised for the particular application.

According to one aspect of the invention there is provided a floor treatment machine for cleaning and/or treating a floor surface, the floor treatment machine comprising:
a body portion provided with a rotatable floor-engaging workhead and a motor comprising a centrally disposed rotatable drive shaft coaxial with and connected to the rotatable floor engaging workhead, a stator comprising an annular coil disposed around the drive shaft, and a rotatable magnet assembly disposed at a spaced location around the stator, wherein the magnet assembly is coupled to the drive shaft and rotatable therewith; and
wherein the dimensions of the motor are selected such that the magnet assembly, drive shaft and floor treatment workhead are simultaneously and selectively rotatable at speeds in the range between 100 and 250 revolutions per minute (RPM) and provide a predetermined torque selected according to the application.

The motor may comprise an outer housing or cover connected to the drive shaft and the magnet assembly may be attached to an internal surface of the outer housing / cover such that the magnet assembly surrounds the internal stator.

Thus, the outer housing or cover and the attached magnet assembly are rotatable around the stator. When energised, the motor provides a direct drive to the workhead without the need for a gearbox. Advantageously, this simplifies the internal structure of the motor, reduces the failure rate, and improves the efficiency of power transmission. As a result of the pre-selected dimensions of the motor, the rotary speed of the direct drive motor (an attached floor engaging workhead) is maintained at an optimal level, to provide ideal cleaning performance by the workhead, reduce vibration and minimise the noise generated, while still delivering the required torque.

The floor engaging workhead may be directly mounted on the drive shaft. Alternatively, the floor treatment workhead may be coupled to the drive shaft via one or more components movable with the workhead and drive shaft.

The floor engaging workhead may be directly mounted on the drive shaft or coupled thereto such that there are no parts between the drive shaft and the floor treatment workhead that are movable relative to the drive shaft and the workhead. Thus, the floor treatment workhead may be directly or indirectly mounted on the motor shaft without any gears positioned therebetween.

Advantageously the direct mounting of the workhead to the drive shaft increases the efficiency of the system by removing losses typically present in a gearbox drivetrain.

The dimensions of the motor that are pre-selected to achieve drive for the workhead within the required parameters include but are not limited to: magnetic surface area; diameter of the magnet assembly and stator; and/or depth of the magnet assembly and/or stator.

The dimensions of the motor may be selected such that the magnetic surface area is between 80 cm² and 160 cm². The dimensions of the motor may be selected such that the magnetic surface area is between 90 cm² and 140 cm².

The diameter of the motor may be between around 100 mm and 200 mm. The diameter of the motor may be between around 110 mm and 160 mm. The diameter of the motor may be between around 120 mm and 150 mm. The diameter of the motor may be approximately 140 mm. Thus, the diameter of the motor is typically greater when compared with conventional motors having a similar structure in order to provide the required torque to drive a workhead at the optimal rotational speed for a floor treatment machine.

The diameter of the motor may be selected at a specific value and the depth of the magnet assembly and/or stator may be varied according to the anticipated application. Thus, the motor may have a diameter of around 140 mm with a variable depth for the magnet assembly and/or stator to change the flux area according to the anticipated torque required for a particular application.

This allows for the production of a standard width motor with variable heights to adjust the flux area to account for the power requirements of a specific application. Advantageously this allows for production of a motor with known width/dimension in two axes, enabling designers of floor cleaning machines to allocate a known width/spacing for a motor within a body portion or floor/base unit of a machine relative to other components, while the flexibility remains to alter the rotational force available by varying the depth of the magnet assembly and only adjusting the height of the motor to change the flux area.

The depth of the magnet assembly and/or stator may be between around 20 mm and 80 mm. The depth of the magnet assembly and/or stator may be between around 30 mm and 60 mm. The depth of the magnet assembly and/or stator may be approximately 40 mm when the predetermined torque required for the application is up to around 7.5 Nm. The depth of the magnet assembly and/or stator may be between 50 and 65 mm when the predetermined torque required for the application is up to around 12 Nm.

The magnet assembly may comprise a plurality of high-density magnets. The rotatable annular magnet assembly may comprise a magnet arrangement of rare earth neodymium magnets.

The rotatable annular magnet assembly may comprise an arrangement of around 11 to 19 rare earth neodymium magnets. The rotatable annular magnet assembly may comprise an arrangement of between around 13 and 17 rare earth neodymium magnets. Advantageously, the high number of magnets increases the overall surface area of the magnetic field in order to achieve a high torque at a low speed.

The stator may comprise a substantially annular iron core with copper windings therearound. The stator may comprise a lamination stack with twelve cores with a fractional slot winding to achieve ten poles with three phases. The high number of poles is provided to achieve high torque with low speed rotation.

Preferably, the rotatable magnet assembly and the stator have a uniform annular spacing. The rotatable magnet assembly may be disposed at a spacing of between around 0.5 mm and 3 mm from the internal stator.

Thus, the air gap between the annular magnet assembly and the stator is minimised while ensuring contact between the rotor and stator is prevented, taking into account respective tolerances, dimensions and mechanical effects/vibration over time. Thus, the gap between rotor and stator is optimised.

The dimensions of the motor may be selected such that the floor treatment workhead is selectively rotatable at speeds up to 220 RPM. The dimensions of the motor may be selected such that the floor treatment workhead is selectively rotatable at speeds in the range between 120 and 200 RPM. The dimensions of the motor may be selected such that the floor treatment workhead is selectively rotatable at speeds in the range between 130 and 180 RPM.

The dimensions of the motor may be selected such that the magnet assembly, drive shaft and floor treatment workhead are selectively rotatable at speeds in the range between 100 and 250 revolutions per minute and provide a torque of up to around 7.5Nm. According to this example, the selected dimensions of the motor may be around 120 to 140 mm diameter and the depth of the magnet assembly and/or stator may be approximately 35 to 40 mm to achieve the output required of the motor.

The dimensions of the motor may be selected such that the magnet assembly, drive shaft and floor treatment workhead are selectively rotatable at speeds in the range between 100 and 250 revolutions per minute and provide a torque of up to around 12Nm. According to this example, the dimensions of the motor may be around 140 mm diameter and the depth of the magnet assembly and/or stator may be approximately 50 mm to achieve the output required of the motor.

The floor treatment machine may be configured as a wet floor treatment machine for the delivery of cleaning fluid to a floor surface, wherein the floor treatment machine comprises a cleaning fluid reservoir and an actuation mechanism coupled thereto for the selective delivery of cleaning fluid to the floor surface.

The drive shaft may comprise a throughbore arranged to selectively receive cleaning fluid for delivery to a floor surface in use. The hollow drive shaft may accommodate a cleaning fluid delivery line Thus, advantageously, the motor may comprise a centrally disposed hollow shaft through which cleaning fluid is selectively deliverable to the associated workhead.

The drive shaft throughbore may be fluidly coupled (via a cleaning fluid line or hose) to a cleaning fluid reservoir and the floor treatment machine may comprise an actuator to allow cleaning fluid from the reservoir to be delivered to the workhead via the throughbore and fluid delivery line or hose located in the drive shaft. A floor facing end of the throughbore within drive shaft may comprise a cleaning fluid outlet.

Thus, the cleaning fluid outlet may be advantageously centrally located on the workhead such that cleaning fluid is centrally deliverable to the workhead and entrained by the workhead during operation. The substantially central delivery of cleaning fluid has the advantage that the fluid is evenly distributed about the workhead and overspray is minimised such that the delivery, use and recovery of cleaning fluid is maximally efficient.

The floor treatment machine may comprise a reservoir for clean water and a waste fluid tank and the waste fluid tank may be fed by a squeegee suction collector which is disposed behind the workhead in use.

The floor treatment machine may be a manually guided machine. The floor treatment machine may be configured as a walk-behind floor scrubber.

The floor treatment machine may comprise a base portion provided with a rotatable floor-engaging workhead and a handle portion movably connected to the base portion such that the handle portion is arranged to guide movement of the base portion.

The floor treatment machine may be configured as a floor scrubber drier, comprising a cleaning fluid reservoir, a waste fluid tank, a source of suction and a squeegee collector which is fluidly connected to the waste fluid tank and disposed behind the base portion with respect to a forward direction of travel, wherein the suction source is coupled to the squeegee collector, which collects waste fluid from the floor surface and feeds it into the waste fluid tank.

At least one of the reservoir for clean water and the waste fluid tank may be disposed on the handle portion. Alternatively, at least one of the reservoir for clean water and the waste fluid tank may be disposed on the base portion. Optionally, both the reservoir for clean water and the waste fluid tank are disposed on the handle portion.

The handle portion may be connected to the base portion via an articulation which comprises a twin axis universal joint arrangement that permits the handle portion to recline, move up and down, and from side to side, while permitting torque to be applied via the handle portion to the base portion for swivel steering.

The floor treatment machine may comprise a walk-behind, ride-on or autonomous machine.

The floor treatment machine may comprise an autonomous machine whereby motion of the body portion and operation of the workheads are autonomously monitored and controlled by appropriate algorithms.

The floor treatment machine may comprise one or more workheads each provided with a motor comprising a centrally disposed rotatable drive shaft directly connected to the respective workhead. The floor treatment machine may comprise twin workheads.

The floor engaging workhead(s) may comprise a brush, scrubber pad, cleaning tool or the like. The workhead(s) may comprise a substantially cylindrical head. The workhead(s) may comprise a floor-facing disc with a selectable surface pad arranged for contact with a floor surface in use.

The workhead(s) and attached motor may be movable between a working configuration in which the / each workhead is deployed to act on the floor surface, and a stowed configuration in which the / each workhead is spaced from the floor surface.

The motor may be mounted an angle relative to an axis orthogonal to the floor in use. Thus, the floor engaging workhead located on the drive shaft may be inclined at an angle, such that a planar upper surface of the workhead is not parallel to the surface of the floor. Optional angular mounting of the motors in this way may generate propulsion for the floor treatment machine.

Advantageously, the invention provides a direct drive for a floor cleaning machine workhead that is efficient and constrained to drive the workhead within the optimum speed in revolutions per minute (RPM) to ensure thorough cleaning, while avoiding overspray when the workhead is used in conjunction with cleaning fluid. The pre-selected dimensions of the motor for the floor treatment machine further provide the required torque for the normal range of operations specific to the application of a floor scrubber drier or any type of floor treatment machine in which the direct drive motor is utilised to drive a floor engaging workhead.

The above described aspect of the invention may be combined with any other feature or embodiment described in the specification or shown in the figures.

Embodiments of the invention are now described with reference to the following drawings in which:
Figure 1 is a schematic front view of one embodiment of a motor and workhead that form part of a floor treatment machine according to the invention;
Figure 2 is a part sectional schematic view of the motor of Figure 1;
Figure 3 is a sectional schematic view of an alternative arrangement of a motor and workhead assembly that form part of a floor treatment machine according to the invention;
Figures 4 and 5 are horizontal and vertical sectional schematic views respectively, of a motor and hollow shaft used with a floor treatment machine according to the invention;

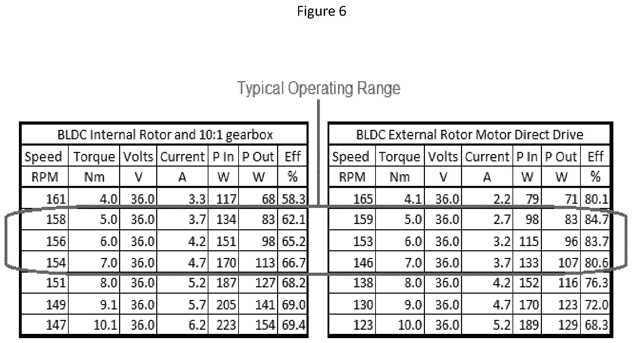

Figure 6 is a table comparing the performance parameters of a conventional prior art motor with a gear box and the motor shown in Figures 1 and 2; and
Figures 7a to 7c are schematic side views of a floor machine according to the invention in operational, transportation and stowed configurations respectively.

The additional details or examples used to describe the drawings should not be construed as limiting the scope of the disclosed invention.

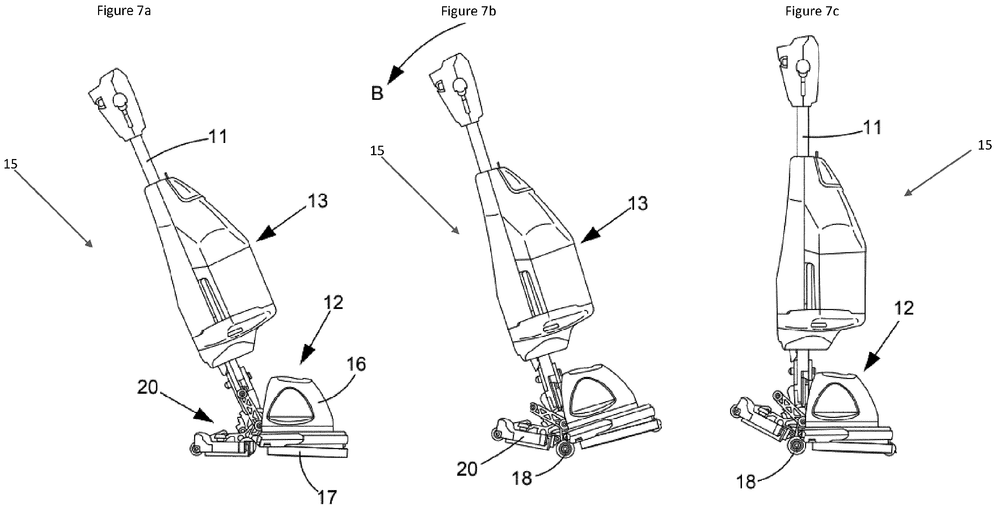

According to one described embodiment of the invention, a floor treatment machine is provided in the form of a manually operable, walk-behind, floor scrubber drier shown generally at 15 in figures 7a to 7c (in operational, transport and stowed configurations, respectively). The machine 15 has an upright handle portion 11 and a base portion 12. The handle portion 11 is connected to the base portion 12 via an articulation which permits reclining of the handle portion 11. The articulation comprises a twin axis universal joint arrangement which allows movement of the handle portion 11 while permitting torque to be applied to the base portion 12 via the handle portion 11 for swivel steering. A pair of primary support wheels 18 are provided at a rear end region of the base portion 12. The articulation makes the machine 15 highly manoeuvrable and easy to steer and swivel around the primary wheel means 18. One machine of this type is disclosed in WO2019207290A2 (Numatic International).

The base portion 12 includes a rotatable workhead 17 configured to clean a floor surface in use. The base portion 12 also carries a motor housing 16 which houses a direct drive motor shown generally at 30 in the figures. The motor 30 is arranged to rotatably drive the disc-shaped workhead 17. The relative dimensions of the motors 30 and the workheads 17 in the embodiments shown in the figures differ. However, the key components of the motor 30 are similar in all embodiments and therefore like reference numerals have been used for equivalent features.

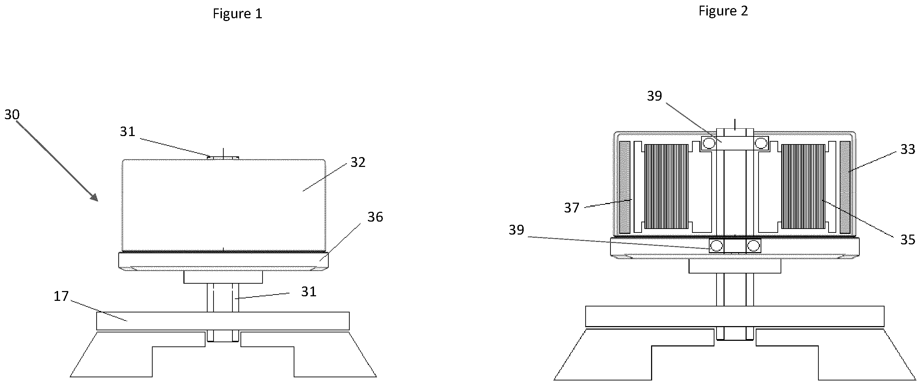

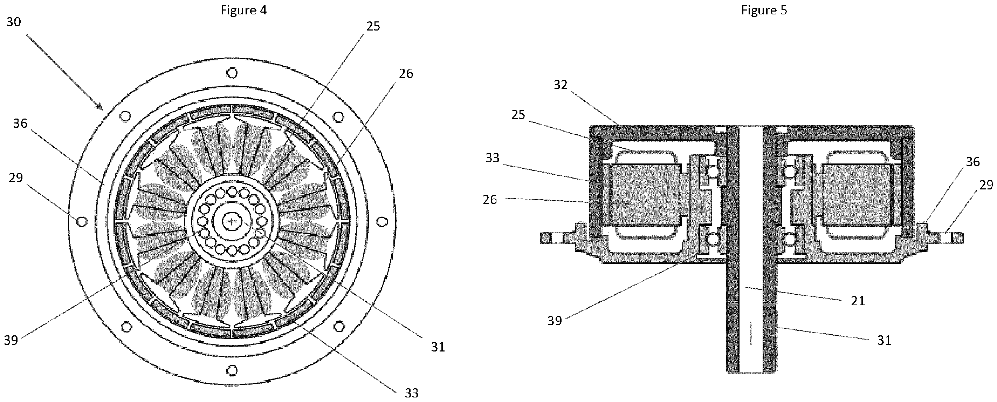

The motor 30 has a centrally disposed rotatable drive shaft 31 with a throughbore 21, and a cover 32 connected to the shaft 31. An inner surface of the cover 32 has a high-density magnet assembly 33 attached thereto in an annular arrangement. The magnet assembly 33 in figures 4 and 5 is made up of sixteen rare earth neodymium magnets. In figures 1 and 2 the magnet assembly may include thirteen rare earth neodymium magnets. According to other embodiments, different numbers of alternately polarised magnets 33 may be assembled within and attached to the inner surface of the cover 32. The cover 32, the drive shaft 31 and the magnet assembly 33 are interconnected and simultaneously rotatable.

The motor 30 also comprises a stator 35 in the form of an annular coil having copper windings 25 around a laminated iron core 26. The stator 35 is disposed between the drive shaft 31 and the magnet assembly 33. The stator 35 comprises a lamination stack with twelve cores 26 with a fractional slot winding to achieve ten poles with three phases. The stator 35 is supported on a motor mounting plate 36 which acts as a stator shell. The motor mounting plate 36 is connected to and contained within the protective motor housing 16 using fixing means inserted through the motor mounting holes 29 that are evenly spaced around the edge of the plate 36. The stator 35 is positioned within the motor 30 under the cover 32 surrounding the drive shaft 31 and spaced from the rotatable components via ball bearing assemblies 39. There is an air gap of 0.5 - 3 mm between the annular magnet assembly 33 and the stator 35 to ensure that there is no contact between the rotor and stator.

The floor treatment machine 15 also includes a circuit board (not shown) having a processor and the required electronic components for actuating and controlling the motor 30. The stator 35 is electrically connected to the circuit board. During operation of the machine 15, the motor 30 is controlled by the circuit board, which provides the required power to the stator 35 so that the cover 32 (and attached drive shaft 31 and workhead 17) rotates around the stator 35 under the action of the magnetic force between the magnet assembly 33 and the annular coil.

Optimum operational parameters have been determined for the machine 15 according to a first embodiment: rotational speed of the workhead 17 is considered optimal between 145 and 160 RPM with an applied torque of up to 7 Nm. In order to operate within these predetermined parameters, the diameter of the motor 30 is designed to be around 130 mm and the depth of the magnet assembly 33 and coil assembly 35 is 40 mm. This arrangement generates a flux area of 15,000 mm², ensuring that the motor 30 functions within the preselected parameters.

According to an alternative embodiment for a larger floor treatment machine: rotational speed of the workhead 17 is considered optimal between 100 and 250 RPM with an applied torque of up to 12 Nm. In order to operate within these predetermined parameters, the diameter of the motor 30 is designed to be around 140 mm and the depth of the magnet assembly 33 and coil assembly 35 is between around 50 to 65 mm. This arrangement enables the motor 30 to function within the preselected parameters.

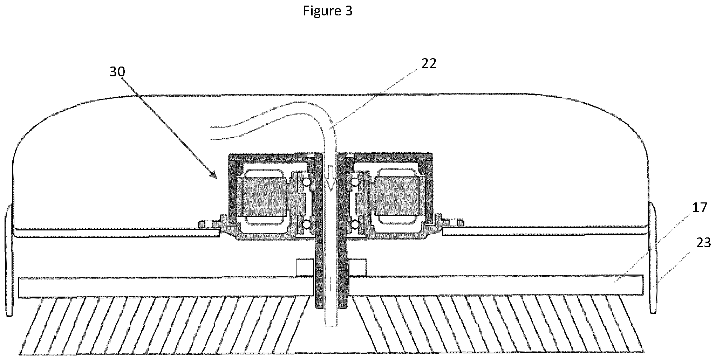

The floor treatment machine 15 had fluid tanks 13 mounted on the handle portion 11. The fluid tanks 13 include a cleaning fluid reservoir and a waste fluid collection tank. The cleaning fluid reservoir is a repository from which cleaning fluid is selectively deliverable to the workhead 17 in use via a cleaning fluid connecting hose 22 (shown in figure 3) within the throughbore 21 of the hollow drive shaft 31 of the motor 30. Delivery of the cleaning fluid through the centre of the workhead 17 via the throughbore 21 in the drive shaft 31 provides a central cleaning fluid feed. This provides optimal central distribution of cleaning fluid to the workhead 17 resulting in an even cleaning action is use.

A brush guard 23 (shown in figure 3) may extend towards the floor at least partially surrounding an exterior of the brushes mounted on the workhead 17. The brush guard 23 can act to limit outward spray and provide protection for the brushes.

A squeegee suction collector assembly 20 is attached to a rear end region of the base portion 12. The suction collector assembly 20 comprises a squeegee blade and carries an inlet connected to a waste fluid collection hose. The waste fluid collection tank is fed by the waste fluid collection hose from the squeegee assembly 20. The collector assembly 20 can be moved between a stowed position (shown in figures 7b and 7c) and an operational position (shown in figure 7a).

Prior to use, in a non-working configuration, the handle portion 11 is lockable in a vertical or substantially vertical position, perpendicular with respect to the base portion 12 as shown in figure 7c. Such a locking mechanism is shown in WO2019207289A1 (Numatic International). The floor treatment machine 15 is transportable in the non-working configuration, in which the squeegee suction collector assembly 20 is in its resting configuration, tilted upwards away from the floor behind the machine 15. The primary wheels 18 support the machine for transport, with the user steering the machine 15 using the handle portion 11. The handle portion 11 may be tilted back during transport so that the workhead 17 is lifted from the floor surface as shown in figure 7b.

In use, the floor treatment machine 15 is moved into the operational configuration (figure 7a) in which the handle portion 11 is reclined and the workhead 17 is in contact with the floor surface. The workhead 17 is urged against the floor surface under the weight of the motor 30 within the housing 16 to provide a good scrubbing force.

During operation, the motor 30 is controlled by the electronic components on the circuit board causing selective energisation of the copper windings 25 of the annular coil or stator 35. In the cleaning or operational configuration, power is delivered to the motor 30 to energise the copper windings 25 of the annular coil or stator 35. The iron core 26 of the annular coil or stator 35 generates a magnetic field, forming a magnetic force within the magnet assembly 33. This force drives rotation of the magnet assembly 33 attached to an interior of the cover 32 and also causes the connected drive shaft 31 and attached workhead 17 to rotate. The preselected dimensions of the motor 30 ensure that the driving force enables operation of the workhead 17 within the required parameters for optimum cleaning for the specific application and/or type of machine. In this way the invention provides an optimally functional floor scrubber drier with a direct drive motor 30 that is capable of efficient cleaning while simultaneously minimising power consumption.

Cleaning fluid is fed from the clean fluid reservoir through the fluid connecting hose 22 and drive shaft 31 of the motor for delivery in a central region of the workhead 17. The optimised rotational speed ensures the cleaning fluid is worked into the floor surface rather than sprayed or splashed radially outwardly from the workhead, which can occur at higher rotational speeds. The synergistic effect of centralised fluid delivery and distribution at controlled rotational speed, ensure maximally efficient cleaning with less fluid wastage from overspray. Consequently, the machine 15 is operational for longer time periods without the requirement to cease operations for frequent cleaning fluid refills.

Thus, the workhead 17 scrubs the floor surface with cleaning solution at the controlled speed and providing the required torque. Waste water deposited behind the workhead 17 is retrieved by the suction collector assembly 20. The collector assembly 20 uses the combined action of the squeegee blade and suction to collect waste fluid. The waste fluid connection hose transfers the waste fluid to the waste fluid tank.

The design, configuration and dimensions of the motor 30 ensure that sufficient torque is generated during use while providing rotation at the optimal speed for the floor scrubber drier 15. This is achieved by increasing the flux area within the motor 30. The direct drive from the motor 30 to the workhead 17 minimises losses associated with conventional motors having gear assemblies and therefore increases the efficiency of the floor scrubber drier 15 containing the direct drive motor 30.

The tables provided in figure 3 provide a comparison of a typical brushless direct current electric motor with an internal rotor and a gear ratio of 10:1 and a brushless direct current motor with an external rotor, such as the motor 30 described with reference to the present embodiment. The rotational speed was maintained at a similar level for both motors to illustrate the differences in efficiency of the two motors. A percentage efficiency of each motor is provided in the final column of each table and the efficiency value is generated by comparing the required 'power in' and the measured 'power out', with these values represented in the penultimate two columns of each table. As demonstrated, the efficiency of the motor 30 provided in the scrubber drier 15 of the invention is far greater when compared with a conventional motor.

Thus, there are many advantages of providing a direct drive motor 30: greater efficiency; reduced power consumption leading to reduced cost of use and lower environmental impact; less noise and vibration; and a simpler mechanism with lower potential for mechanical failure and greater longevity.

Modifications and improvements can be made without departing from the scope of the invention. Relative terms such as "outer", "internal", and/or "central" are used for illustrative purposes only and are not intended to limit the scope of the invention.

According to other embodiments, the motor 30 can be used in conjunction with any suitable alternative arrangement of components within a manually operable scrubber drier 15. For example, the scrubber drier 15 may have a single or twin workheads each with an associated direct drive motor 30. The machine 15 may be powered via a mains electricity supply or a battery. According to other embodiments the cleaning fluid reservoir and waste fluid tank may be separated and/or provided on the base portion 12 and/or the handle portion 11.

Other, more compact arrangements for suction of waste fluid may be adopted in place of the squeegee suction collector. For each different arrangement of a floor treatment machine or compact scrubber drier the dimensions of the motor are preselected so that the motor 30 is configured to directly drive the workhead(s) 17 without the use of a gearbox at the required rotational speed and with the necessary torque.

According to other embodiments, the floor treatment machine may be any type of cleaning or polishing machine adapted for the treatment of floors and the invention can encompass machines having different sizes, features and configurations including but not limited to: compact machines, walk behind machines, ride-on machines, autonomous machines and the like. In any floor treatment machine of the invention, optimal rotational drive to the workheads 17 can be achieved by calculating the required torque and preferred RPM and selecting the corresponding dimensions and arrangement of the direct drive motor 30.

## Claims

1. A floor treatment machine (15) for cleaning and/or treating a floor surface, the floor treatment machine (15) comprising:
a body portion provided with a rotatable floor-engaging treatment workhead (17) and a motor (30) comprising a centrally disposed rotatable drive shaft (31) coaxial with and connected to the floor engaging workhead (17), a stator (35) comprising an annular coil disposed around the drive shaft (31), and a rotatable magnet assembly (33) disposed at a spaced location around the stator (35), wherein the magnet assembly (33) is coupled to the drive shaft (31) and rotatable therewith; and
wherein the dimensions of the motor (30) are selected such that the magnet assembly (33), drive shaft (31) and floor treatment workhead (17) are selectively rotatable at speeds in the range between 100 and 250 revolutions per minute and provide a predetermined torque selected according to the application.

2. A floor treatment machine (15) as claimed in claim 1, wherein the motor (30) comprises a motor housing (32) connected to the drive shaft (31) and the magnet assembly (33) is attached to an internal surface of the motor housing (32) such that the magnet assembly (33) is coaxial with and surrounds the internal stator (35).

3. A floor treatment machine (15) as claimed in claim 1 or claim 2, wherein the floor treatment workhead (17) is directly mounted on the drive shaft (31) or coupled thereto such that there are no parts between the drive shaft (31) and the floor treatment workhead (17) that are movable relative to the drive shaft (31) and the workhead (17).

4. A floor treatment machine (15) as claimed in any preceding claim, wherein the dimensions of the motor (30) that are pre-selected to selectively drive the workhead within the required parameters include: flux area; diameter of the magnet assembly (33) and internal stator (35); and/or depth of the magnet assembly (33) and/or internal stator (35).

5. A floor treatment machine (15) as claimed in any preceding claim, wherein the dimensions of the motor (30) are selected such that the magnetic surface area is between around 90 and 140 cm².

6. A floor treatment machine (15) as claimed in any preceding claim, wherein the diameter of the motor (30) is between around 120 and 160 mm.

7. A floor treatment machine (15) as claimed in any preceding claim, wherein the depth of the magnet assembly (33) and/or internal stator (35) is between around 20 and 80 mm.

8. A floor treatment machine (15) as claimed in any preceding claim, wherein the dimensions of the motor (30) are selected to provide a torque of up to 12 Nm.

9. A floor treatment machine (15) as claimed in any preceding claim, wherein the annular magnet assembly (33) comprises a plurality of high-density magnets.

10. A floor treatment machine (15) as claimed in any preceding claim, wherein the annular magnet assembly (33) comprises a magnet arrangement of between eleven and seventeen alternately polarised rare earth neodymium magnets.

11. A floor treatment machine (15) as claimed in any preceding claim, wherein the stator (35) comprises a substantially annular laminated iron core arranged coaxial with the drive shaft with copper windings around the iron core.

12. A floor treatment machine (15) as claimed in any preceding claim, wherein the stator (35) comprises a lamination stack with twelve cores with a fractional slot winding to achieve ten poles with three phases.

13. A floor treatment machine (15) as claimed in any preceding claim, configured for the selective delivery of cleaning fluid to a floor surface in use, wherein the machine (15) comprises a cleaning fluid reservoir and an actuation mechanism for the selective delivery of cleaning fluid to the floor surface via a cleaning fluid delivery line (22), and wherein the drive shaft (31) comprises a throughbore (21) through which cleaning fluid is deliverable to a floor surface in use via the cleaning fluid delivery line (22).

14. A floor treatment machine (15) as claimed in any preceding claim, configured as a floor scrubber drier, comprising a cleaning fluid reservoir, a waste fluid tank, a source of suction and a squeegee collector which is fluidly connected to the waste fluid tank and disposed behind the body portion with respect to a forward direction of travel in use, wherein the suction source is coupled to the squeegee collector, which collects waste fluid from the floor surface and feeds it into the waste fluid tank.

15. A floor treatment machine (15) as claimed in any preceding claim, wherein the machine comprises two or more workheads (17), each workhead (17) provided with a respective direct drive motor (30).

## Patentansprüche

1. Bodenbearbeitungsmaschine (15) zum Reinigen und/oder Bearbeiten einer Bodenoberfläche, wobei die Bodenbearbeitungsmaschine (15) Folgendes umfasst:
einen Körperabschnitt, der mit einem drehbaren Bodeneingriffsbearbeitungsarbeitskopf (17) und einem Motor (30) versehen ist, der eine zentral angeordnete drehbare Antriebswelle (31) umfasst, die koaxial mit dem Bodeneingriffsarbeitskopf (17) angeordnet und mit diesem verbunden ist, einen Stator (35), der eine ringförmige Spule umfasst, die um die Antriebswelle (31) herum angeordnet ist, und eine drehbare Magnetbaugruppe (33), die an einer beabstandeten Stelle um den Stator (35) herum angeordnet ist, wobei die Magnetbaugruppe (33) mit der Antriebswelle (31) gekoppelt und mit dieser drehbar ist; und
wobei die Abmessungen des Motors (30) so gewählt sind, dass die Magnetbaugruppe (33), die Antriebswelle (31) und der Bodenbearbeitungsarbeitskopf (17) selektiv mit Geschwindigkeiten im Bereich zwischen 100 und 250 Umdrehungen pro Minute drehbar sind und ein vorbestimmtes Drehmoment liefern, das gemäß der Anwendung ausgewählt wird.

2. Bodenbearbeitungsmaschine (15) nach Anspruch 1, wobei der Motor (30) ein Motorgehäuse (32) umfasst, das mit der Antriebswelle (31) verbunden ist, und die Magnetbaugruppe (33) an einer inneren Oberfläche des Motorgehäuses (32) befestigt ist, so dass die Magnetbaugruppe (33) koaxial mit dem inneren Stator (35) angeordnet ist und diesen umgibt.

3. Bodenbearbeitungsmaschine (15) nach Anspruch 1 oder Anspruch 2, wobei der Bodenbearbeitungsarbeitskopf (17) direkt auf der Antriebswelle (31) montiert oder mit dieser gekoppelt ist, so dass sich zwischen der Antriebswelle (31) und dem Bodenbearbeitungsarbeitskopf (17) keine Teile befinden, die relativ zur Antriebswelle (31) und zum Arbeitskopf (17) beweglich sind.

4. Bodenbearbeitungsmaschine (15) nach einem der vorstehenden Ansprüche, wobei die Abmessungen des Motors (30), die vorgewählt werden, um den Arbeitskopf innerhalb der erforderlichen Parameter selektiv anzutreiben, Folgendes einschließen: Flussbereich; Durchmesser der Magnetbaugruppe (33) und des internen Stators (35); und/oder Tiefe der Magnetbaugruppe (33) und/oder des internen Stators (35).

5. Bodenbearbeitungsmaschine (15) nach einem der vorstehenden Ansprüche, wobei die Abmessungen des Motors (30) so gewählt sind, dass die magnetische Oberfläche zwischen etwa 90 und 140 cm² liegt.

6. Bodenbearbeitungsmaschine (15) nach einem der vorstehenden Ansprüche, wobei der Durchmesser des Motors (30) zwischen etwa 120 und 160 mm liegt.

7. Bodenbearbeitungsmaschine (15) nach einem der vorstehenden Ansprüche, wobei die Tiefe der Magnetbaugruppe (33) und/oder des Innenstators (35) zwischen etwa 20 und 80 mm liegt.

8. Bodenbearbeitungsmaschine (15) nach einem der vorstehenden Ansprüche, wobei die Abmessungen des Motors (30) so gewählt sind, dass er ein Drehmoment von bis zu 12 Nm bereitstellt.

9. Bodenbearbeitungsmaschine (15) nach einem der vorstehenden Ansprüche, wobei die ringförmige Magnetbaugruppe (33) eine Vielzahl von Magneten mit hoher Dichte umfasst.

10. Bodenbearbeitungsmaschine (15) nach einem der vorstehenden Ansprüche, wobei die ringförmige Magnetbaugruppe (33) eine Magnetanordnung aus zwischen elf und siebzehn abwechselnd polarisierten Seltenerden-Neodym-Magneten umfasst.

11. Bodenbearbeitungsmaschine (15) nach einem der vorstehenden Ansprüche, wobei der Stator (35) einen im Wesentlichen ringförmigen, laminierten Eisenkern umfasst, der koaxial zur Antriebswelle angeordnet ist und Kupferwicklungen um den Eisenkern hat.

12. Bodenbearbeitungsmaschine (15) nach einem der vorstehenden Ansprüche, wobei der Stator (35) ein Blechpaket mit zwölf Kernen mit einer fraktionierten Schlitzwicklung umfasst, um zehn Pole mit drei Phasen zu erreichen.

13. Bodenbearbeitungsmaschine (15) nach einem der vorstehenden Ansprüche, die konfiguriert ist für die selektive Abgabe von Reinigungsflüssigkeit an eine Bodenoberfläche im Gebrauch, wobei die Maschine (15) einen Reinigungsflüssigkeitsbehälter und einen Betätigungsmechanismus für die selektive Abgabe von Reinigungsflüssigkeit an die Bodenoberfläche über eine Reinigungsflüssigkeitsabgabeleitung (22) umfasst, und wobei die Antriebswelle (31) eine Durchgangsbohrung (21) umfasst, durch die Reinigungsflüssigkeit an eine Bodenoberfläche im Gebrauch über die Reinigungsflüssigkeitsabgabeleitung (22) abgebbar ist.

14. Bodenbearbeitungsmaschine (15) nach einem der vorstehenden Ansprüche, die als Bodenschrubbertrockner konfiguriert ist, umfassend einen Reinigungsflüssigkeitsbehälter, einen Abfallflüssigkeitstank, eine Saugquelle und einen Abstreifersammler, der mit dem Abfallflüssigkeitstank in Fluidverbindung steht und in Bezug auf eine Vorwärtsfahrtrichtung im Gebrauch hinter dem Körperabschnitt angeordnet ist, wobei die Saugquelle mit dem Abstreifersammler gekoppelt ist, der Abfallflüssigkeit von der Oberfläche des Bodens sammelt und in den Abfallflüssigkeitstank leitet.

15. Bodenbearbeitungsmaschine (15) nach einem der vorstehenden Ansprüche, wobei die Maschine zwei oder mehr Arbeitsköpfe (17) umfasst, wobei jeder Arbeitskopf (17) mit einem entsprechenden Direktantriebsmotor (30) versehen ist.

## Revendications

1. Machine de traitement de sol (15) pour le nettoyage et/ou le traitement d'une surface de sol, la machine de traitement de sol (15) comprenant :
une partie corps dotée d'une tête de travail de traitement en prise avec le sol rotative (17) et d'un moteur (30) comprenant un arbre d'entraînement rotatif disposé de façon centrale (31) coaxial avec et raccordé à la tête de travail en prise avec le sol (17), un stator (35) comprenant une bobine annulaire disposée autour de l'arbre d'entraînement (31), et un ensemble d'aimants rotatif (33) disposé au niveau d'un emplacement espacé autour du stator (35), dans laquelle l'ensemble d'aimants (33) est accouplé à l'arbre d'entraînement (31) et rotatif avec celui-ci ; et
dans laquelle les dimensions du moteur (30) sont sélectionnées de sorte que l'ensemble d'aimants (33), l'arbre d'entraînement (31) et la tête de travail de traitement de sol (17) soient sélectivement rotatifs à des vitesses comprises dans la plage de 100 à 250 tours par minute et fournissent un couple prédéterminé sélectionné selon l'application.

2. Machine de traitement de sol (15) selon la revendication 1, dans laquelle le moteur (30) comprend un carter de moteur (32) raccordé à l'arbre d'entraînement (31) et l'ensemble d'aimants (33) est fixé à une surface interne du carter de moteur (32) de sorte que l'ensemble d'aimants (33) soit coaxial avec et entoure le stator interne (35).

3. Machine de traitement de sol (15) selon la revendication 1 ou la revendication 2, dans laquelle la tête de travail de traitement de sol (17) est directement montée sur l'arbre d'entraînement (31) ou accouplée à celui-ci de sorte qu'il n'y ait pas de pièces entre l'arbre d'entraînement (31) et la tête de travail de traitement de sol (17) qui soient mobiles par rapport à l'arbre d'entraînement (31) et à la tête de travail (17).

4. Machine de traitement de sol (15) selon l'une quelconque des revendications précédentes, dans laquelle les dimensions du moteur (30) qui sont présélectionnées pour entraîner sélectivement la tête de travail à l'intérieur des paramètres requis incluent : une zone de flux ; un diamètre de l'ensemble d'aimants (33) et du stator externe (35) ; et/ou une profondeur de l'ensemble d'aimants (33) et/ou du stator interne (35).

5. Machine de traitement de sol (15) selon l'une quelconque des revendications précédentes, dans laquelle les dimensions du moteur (30) sont sélectionnées de sorte que la zone de surface magnétique soit comprise entre environ 40 et 140 cm².

6. Machine de traitement de sol (15) selon l'une quelconque des revendications précédentes, dans laquelle le diamètre du moteur (30) est compris entre environ 120 et 160 mm.

7. Machine de traitement de sol (15) selon l'une quelconque des revendications précédentes, dans laquelle la profondeur de l'ensemble d'aimants (33) et/ou du stator interne (35) est comprise entre environ 20 et 80 mm.

8. Machine de traitement de sol (15) selon l'une quelconque des revendications précédentes, dans laquelle les dimensions du moteur (30) sont sélectionnées pour fournir un couple pouvant atteindre 12 Nm.

9. Machine de traitement de sol (15) selon l'une quelconque des revendications précédentes, dans laquelle l'ensemble d'aimants annulaires (33) comprend une pluralité d'aimants à haute densité.

10. Machine de traitement de sol (15) selon l'une quelconque des revendications précédentes, dans laquelle l'ensemble d'aimants annulaires (33) comprend un agencement d'aimants d'entre onze et dix-sept aimants de néodyme des terres rares polarisés en alternance.

11. Machine de traitement de sol (15) selon l'une quelconque des revendications précédentes, dans laquelle le stator (35) comprend un cœur de fer stratifié sensiblement annulaire agencé coaxial avec l'arbre d'entraînement avec des enroulements de cuivre autour du noyau de fer.

12. Machine de traitement de sol (15) selon l'une quelconque des revendications précédentes, dans laquelle le stator (35) comprend un empilement de stratification avec douze cœurs avec un enroulement de fente fractionnaire pour obtenir dix pôles avec trois phases.

13. Machine de traitement de sol (15) selon l'une quelconque des revendications précédentes, configurée pour la distribution sélective de fluide de nettoyage à une surface de sol lors de l'utilisation, dans laquelle la machine (15) comprend un réservoir de fluide de nettoyage et un mécanisme d'actionnement pour la distribution sélective de fluide de nettoyage à la surface de sol par le biais d'une conduite de distribution de fluide de nettoyage (22), et dans laquelle l'arbre d'entraînement (31) comprend un alésage traversant (21) à travers lequel un fluide de nettoyage peut être distribué à une surface de sol lors de l'utilisation par le biais de la conduite de distribution de fluide de nettoyage (22).

14. Machine de traitement de sol (15) selon l'une quelconque des revendications précédentes, configurée comme un épurateur sécheur de sol, comprenant un réservoir de fluide de nettoyage, un réservoir de fluide résiduaire, une source d'aspiration et un collecteur de racloir qui est en liaison fluidique avec le réservoir de fluide résiduaire et disposé derrière la partie corps par rapport à une direction de déplacement vers l'avant lors de l'utilisation, dans laquelle la source d'aspiration est accouplée au collecteur de raclette, qui collecte un fluide résiduaire à partir de la surface de sol et l'introduit dans le réservoir de fluide résiduaire.

15. Machine de traitement de sol (15) selon l'une quelconque des revendications précédentes, dans laquelle la machine comprend deux ou plus de deux têtes de travail (17), chaque tête de travail (17) étant dotée d'un moteur à entraînement direct respectif (30).
